# EUROPÄISCHE PATENTSCHRIFT

(11) **EP 3 734 384 B1**
(45) Veröffentlichungstag und Bekanntmachung des Hinweises auf die Patenterteilung: **20.12.2023**
(21) Anmeldenummer: 19172263.6
(22) Anmeldetag: 02.05.2019
(51) Int. Cl.: G05B 23/02

(54) **VERFAHREN UND VORRICHTUNG ZUR ÜBERWACHUNG DES BETRIEBSZUSTANDS EINER ANLAGE**
METHOD AND DEVICE FOR MONITORING AN OPERATIONAL STATUS OF A SYSTEM
PROCÉDÉ ET DISPOSITIF DE SURVEILLANCE DE L'ÉTAT DE FONCTIONNEMENT D'UNE INSTALLATION

(43) Veröffentlichungstag der Anmeldung: 04.11.2020
(73) Patentinhaber: ETM professional control GmbH, 7000 Eisenstadt (AT)
(72) Erfinder: Högerl, Daniel, 7053 Hornstein (AT)
(74) Vertreter: Siemens Patent Attorneys

(56) Entgegenhaltungen:
- DE-A1-102005 040 978
- DE-A1-102018 200 887
- US-B2- 9 443 201

## Beschreibung

Die Erfindung betrifft ein Verfahren und eine Vorrichtung zur Überwachung des Betriebszustands einer Anlage.

Die Überwachung beispielsweise von Produktions-Anlagen ist in der Industrie sehr wichtig, um Ausfallzeiten für die Produktion möglichst gering zu halten, sowie eine Wartung möglichst genau planen zu können. Dynamische Wartungsintervalle können signifikant zur Optimierung von Anlagenkosten beitragen. Zu diesem Zweck werden häufig automatisierte Überwachungsvorrichtungen eingesetzt, wie beispielsweise Siemens SIMATIC WinCC OA, die unter dem Begriff SCADA zusammengefasst werden können.

Unter Supervisory Control and Data Acquisition (SCADA) versteht man das Überwachen und Steuern technischer Prozesse mittels eines Computer-Systems.

Die automatisierte Überwachung von Prozessen und Verfahren kann dabei helfen, auftretende Fehler schnell zu erkennen und zu beheben.

Im Stand der Technik sind Verfahren zur vorausschauenden Fehlererkennung bekannt, welche jedoch keine hinreichende Erkennungssicherheit und Präzision aufweisen.

In der Patentschrift US 9 443 201 B2 wird ein System und ein Verfahren zum Überwachen eines Signals von einer Vorrichtung offenbart, wobei ein aus dem Signal extrahiertes Merkmal automatisch definiert wird. Signale werden über einen Zeitraum empfangen, in dem sich die Vorrichtung in einem normalen Betriebsmodus befindet. Merkmale werden in einem Lernmodus klassifiziert und angewendet, um ein Referenzmodell zu erstellen, das einen Betriebsmodus innerhalb des Normalzustands definiert. In einem Testmodus wird ein von der Vorrichtung erzeugtes Signal empfangen, ein Merkmal extrahiert und klassifiziert. Aktuelle Daten, die im Betriebsmodus von der Vorrichtung erzeugt werden, werden vom System als anormal klassifiziert, wenn sie nicht innerhalb der Grenzen des Referenzmodells liegen oder Informationen/Strukturen in einem orthogonalen Teilraum enthalten. Ein erlerntes Referenzmodell wird durch einen Benutzer oder automatisch erweitert.

In der Veröffentlichung DE 10 2018 200 887 A1 wird der Zustand eines Testobjekts diagnostiziert. Die Diagnose wird unter Verwendung einer Besonderheiten-Menge unter der Verwendung eines "machine learning"-Modells ausgeführt. Wenn sich Diagnoseresultate unterscheiden, wird bestimmt, dass es notwendig ist, zumindest das physische Modell oder das mathematische Modell zu aktualisieren.

Die Veröffentlichung DE 10 2005 040978 A1 beschreibt ein Verfahren zur Überwachung des Betriebszustandes rotierender Walzen in einer industriellen Anlage. Dabei werden im Betrieb erzeugte Vibrationen von rotierenden Walzen während eines vorbestimmten Zeitintervalls erfasst, das momentan vorliegende Frequenzspektrum des zeitlich veränderlichen elektrischen Signals für das vorbestimmte Zeitintervall bestimmt und das bestimmte Frequenzspektrum mit einem zuvor besorgten Referenz-Frequenzspektrum, das einem definierten Betriebszustand der rotierenden Walze entspricht, verglichen. Eine aktuelle Abweichung zwischen dem aktuellen Frequenzspektrum wird mit dem Referenz-Frequenzspektrum verglichen und eine Maßnahme ausgelöst, falls die bestimmte Abweichung zwischen den Spektren größer ist als eine geduldete Grenz-Abweichung zwischen den Spektren.

Es ist Aufgabe der Erfindung die Analyse von möglichen Störungen in Prozessen weiter zu verbessern und zu prognostizieren, um zukünftige Störungen weiter zu reduzieren oder zu vermeiden.

Die Aufgabe wird durch ein Verfahren eingangs genannter Art gelöst, wobei folgende Schritte ausgeführt werden:
a) Erfassen des zeitlichen Verlaufs zumindest eines Betriebsparameters in einem Referenzbetrieb der Anlage und Transformieren in den Frequenzbereich als Referenz-Parameter,
b) Erfassen des zeitlichen Verlaufs des zumindest Betriebsparameters in einem Normalbetrieb der Anlage und Transformieren in den Frequenzbereich als Normal-Parameter,
c) Erfassen des zeitlichen Verlaufs des zumindest Betriebsparameters in einem Störbetrieb der Anlage und Transformieren in den Frequenzbereich als Stör-Parameter,
d) Erzeugen und Trainieren eines Anlagen-Modells, welches auf dem Prinzip des maschinellen Lernens beruht, zumindest mit dem Referenz-Parameter, dem Normal-Parameter und dem Stör-Parameter,
e) Erfassen des zeitlichen Verlaufs des zumindest einen Betriebsparameters in einem laufenden Betrieb der Anlage und Transformieren in den Frequenzbereich als aktuellen Parameter,
f) Erzeugen eines Betriebszustands-Schätzers mittels dem Anlagen-Modell und dem aktuellen Parameter, wobei bei Überschreiten des Betriebszustands-Schätzers gegenüber einem vorgegebenen Grenzwert ein Betriebszustands-Signal ausgegeben wird.

Mithilfe der Analyse der Betriebsparameter im Frequenzbereich kann ein "Fingerabdruck" für die Anlage erzeugt werden, welcher einen Referenz- beziehungsweise einen Normal-Betrieb der Anlage beschreibt. Innerhalb dieser Betriebs-Modi befindet sich die Anlage in zulässigen Bereichen für einzelne Parameter, beispielsweise für Betriebs- oder Prozesstemperaturen, Drehzahlbereichen von Motoren oder Pumpen, Kühlleistungen oder ähnlichem.

Insbesondere durch Anwendung der Zeit-Frequenz-Transformation kann auf eine einfache Weise ein besonders aussagekräftiges Anlagen-Modell gebildet werden, welches besonders genaue Aussagen zur Schätzung des Betriebszustands der Anlage zulässt, insbesondere hinsichtlich der Planung von Wartungsintervallen. Außerdem können eine sehr hohe Erkennungssicherheit und Präzision der Prädiktion erreicht werden.

Die Zeit-Frequenz-Transformation oder Fourier-Transformation, genauer die kontinuierliche Fourier-Transformation, ist eine mathematische Beschreibung aus der Fourier-Analyse, wie kontinuierliche, aperiodische Signale in ein kontinuierliches Spektrum zerlegt werden. Die Funktion, die dieses Spektrum beschreibt, nennt man auch Fourier-Transformierte oder Spektralfunktion.

Ein Referenzbetrieb wird als ein optimaler Betriebsmodus angesehen, in welchem sich die relevanten Betriebsparameter innerhalb der vorgesehenen Grenzen befinden.

Ein Normalbetrieb wird als ein noch zulässiger Betriebsmodus angesehen, in welchem beispielsweise kurzfristige Überschreitungen der vorgesehenen Grenzen toleriert werden können, jedoch beispielsweise eine Beeinflussung auf ein mögliches Wartungsintervall vorkommen kann.

In einer Weiterbildung der Erfindung ist es vorgesehen, dass sich der Referenzbetrieb von dem Normalbetrieb der Anlage durch unterschiedliche Betriebsmodi der Anlage unterscheidet, beispielsweise unterschiedliche Belastungen oder verschiedene Betriebszeitpunkte der Anlage während des Betriebs.

Dadurch wird erreicht, dass ein dynamisches Anlagen-Modell gebildet werden kann, welches eine besonders genaue Schätzung des Betriebszustands der Anlage zulässt.

In einer Weiterbildung der Erfindung ist es vorgesehen, dass die Zeitbasis, das heißt das Zeitfenster für die Erfassung des jeweiligen Parameters im Zeitbereich, für die Bestimmung des Referenz-Parameters, des Normal-Parameters, des Stör-Parameters und des aktuellen Parameters gleich lang ist.

Dadurch wird erreicht, dass das Anlagen-Modell auf besonders einfache Weise gebildet werden kann, da die einzelnen Parameter einfach in Bezug zueinander gebracht werden können.

In einer Weiterbildung der Erfindung ist es vorgesehen, dass bei der Bestimmung des Stör-Parameters im Schritt c) zumindest eine Stör-Ursache erfasst wird, welche durch den Betriebszustands-Schätzer und vorzugsweise im Betriebszustands-Signal berücksichtigt wird.

Dadurch wird erreicht, dass bei der Schätzung des Betriebszustands der Anlage auch eine Schätzung über die Stör-Ursache durchgeführt wird, wodurch eine Reparatur, Wartung oder auch der weitere Betrieb der Anlage verbessert wird.

In einer Weiterbildung der Erfindung ist es vorgesehen, dass bei der Bestimmung des Stör-Parameters im Schritt c) zumindest ein Zeitpunkt des Stör-Betriebs erfasst wird, welche durch den Betriebszustands-Schätzer und vorzugsweise im Betriebszustands-Signal berücksichtigt wird.

Dadurch wird erreicht, dass eine Schätzung eines Zeitpunkts einer zukünftigen Störung des Betriebszustands der Anlage möglich ist, und entsprechende Maßnahmen zur Reduktion, Verhinderung oder Unterstützung eines Betriebs während der prognostizierten Störung zu diesem Zeitpunkt erfolgen kann.

In einer Weiterbildung der Erfindung ist es vorgesehen, dass wobei ein weiterer Verfahrensschritt g) ausgeführt wird, in welchem das Anlagen-Modell unter Verwendung des aktuellen Parameters neu bestimmt wird.

Dadurch wird erreicht, dass eine dynamisches Anlagen-Modell gebildet werden kann, welches eine besonders genaue Schätzung des Betriebszustands der Anlage zulässt.

In einer Weiterbildung der Erfindung ist es vorgesehen, dass der Betriebszustands-Schätzer bei der Bestimmung eines Wartungsintervalls der Anlage verwendet wird. Somit kann das Verfahren auch als Verfahren zur Bestimmung eines optimalen Wartungsintervalls der Anlage verstanden werden, welches von tatsächlich ermittelten Betriebsparametern bestimmt wird.

Dadurch wird erreicht, dass ein optimales, dynamisches Zeitintervall für die Wartung der Anlage bestimmt werden kann, und ein effizienter Betrieb der Anlage mit niedrigen Ausfallzeiten ermöglicht wird.

Die erfindungsgemäße Aufgabe wir ebenfalls durch eine Vorrichtung zur Überwachung des Betriebszustands einer Anlage gelöst, wobei von der Überwachungs-Vorrichtung zumindest ein Erfassungs-Mittel umfasst ist, welches dazu eingerichtet ist, einen Referenz-Parameter, einen Normal-Parameter, einen Stör-Parameter und einen aktuellen Parameter zu erfassen, und von der Überwachungs-Vorrichtung ferner zumindest eine Rechnen-Vorrichtung umfasst ist, welche dazu eingerichtet ist, ein Anlagen-Modell, welches auf dem Prinzip des maschinellen Lernens beruht, zumindest mit dem Referenz-Parameter, dem Normal-Parameter und dem Stör-Parameter zu erzeugen und zu trainieren, und einen Betriebszustands-Schätzer mittels dem Anlagen-Modell und dem aktuellen Parameter zu bestimmen, und bei Überschreiten des Betriebszustands-Schätzers gegenüber einem vorgegebenen Grenzwert ein Betriebszustands-Signal auszugeben, und das Verfahren auszuführen.

Die genannten Verfahrensschritte können auch in einer anderen Reihenfolge durchgeführt werden, beispielsweise auch parallel zueinander.

Die einzelnen Weiterbildungen können auch untereinander kombiniert werden.

Der oder die Betriebszustands-Parameter können beispielsweise in einem Speicher nach deren Erfassung zwischengespeichert werden.

Ein oder mehrere Betriebszustands-Parameter können durch dasselbe oder auch unterschiedliche Erfassungs-Mittel erfasst werden.

Die Erfindung wird nachfolgend anhand eines in den beigeschlossenen Zeichnungen dargestellten Ausführungsbeispiels näher erläutert. In den Zeichnungen zeigt:
- Fig. 1: ein Flussdiagramm eines Ausführungsbeispiels für das erfindungsgemäße Verfahren,
- Fig. 2: ein Blockschaltbild eines Ausführungsbeispiel für die erfindungsgemäße Vorrichtung.

Es ist klar, dass zur Ausführung des erfindungsgemäßen Verfahrens weitere Detail-Schritte notwendig sein können, um zur erfindungsgemäßen Lösung zu kommen, wie beispielsweise bei der Erzeugung eines mathematischen Modells, welches eine technische Anlage in ihren Funktionen und Betriebsmodi abbildet. Zum besseren Verständnis der Erfindung wird auf diese Aspekte in der weiteren Beschreibung verzichtet, obwohl diese in einer praktischen Ausführung der Erfindung notwendig sein können.

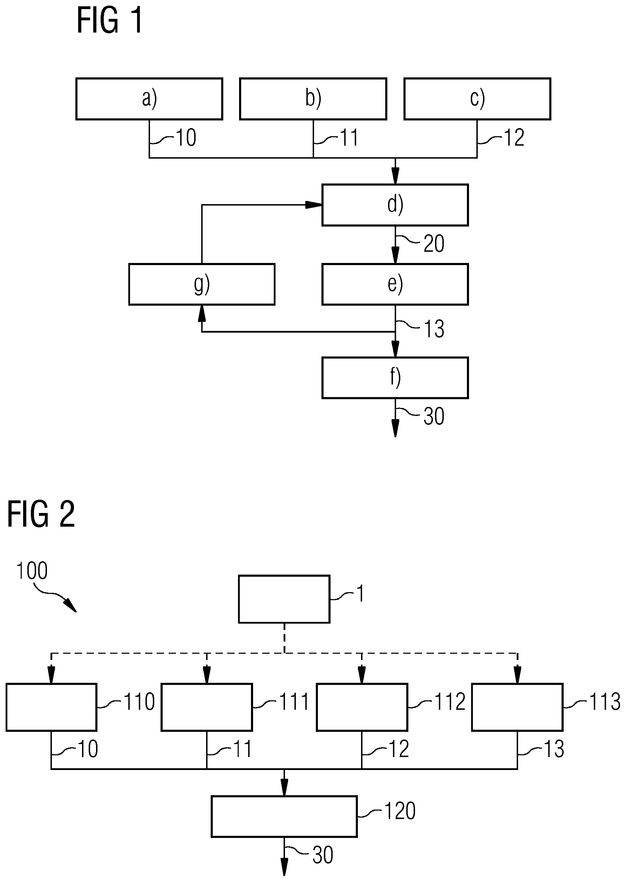

**Fig. 1** zeigt ein Flussdiagramm eines Ausführungsbeispiels für das Verfahren zur Überwachung des Betriebszustands einer Anlage 1, wobei folgende Schritte ausgeführt werden:
a) Erfassen des zeitlichen Verlaufs zumindest eines Betriebsparameters in einem Referenzbetrieb der Anlage 1 und Transformieren in den Frequenzbereich als Referenz-Parameter 10,
b) Erfassen des zeitlichen Verlaufs des zumindest Betriebsparameters in einem Normalbetrieb der Anlage 1 und Transformieren in den Frequenzbereich als Normal-Parameter 11,
c) Erfassen des zeitlichen Verlaufs des zumindest Betriebsparameters in einem Störbetrieb der Anlage 1 und Transformieren in den Frequenzbereich als Stör-Parameter 12,
d) Erzeugen und Trainieren eines Anlagen-Modells 20, welches auf dem Prinzip des maschinellen Lernens beruht, zumindest mit dem Referenz-Parameter 10, dem Normal-Parameter 11 und dem Stör-Parameter 12,
e) Erfassen des zeitlichen Verlaufs des zumindest einen Betriebsparameters in einem laufenden Betrieb der Anlage 1 und Transformieren in den Frequenzbereich als aktuellen Parameter 13,
f) Erzeugen eines Betriebszustands-Schätzers mittels dem Anlagen-Modell 20 und dem aktuellen Parameter 13, wobei bei Überschreiten des Betriebszustands-Schätzers gegenüber einem vorgegebenen Grenzwert ein Betriebszustands-Signal 30 ausgegeben wird.

Der Referenzbetrieb unterscheidet sich von dem Normalbetrieb der Anlage 1 durch unterschiedliche Betriebsmodi der Anlage 1, beispielsweise unterschiedliche Belastungen oder verschiedene Betriebszeitpunkte der Anlage 1 während des Betriebs.

Die Zeitbasis für die Bestimmung des Referenz-Parameters 10, des Normal-Parameters 11, des Stör-Parameters 12 und des aktuellen Parameters 13 ist in diesem Ausführungsbeispiel gleich lang.

Als Anlagen-Modell eignen sich beispielsweise Modelle, welche auf der linearen Regression beruhen.

Ein Random Forest ist ein Klassifikationsverfahren, das aus mehreren unkorrelierten Entscheidungsbäumen besteht. Alle Entscheidungsbäume sind unter einer bestimmten Art von Randomisierung während des Lernprozesses gewachsen. Für eine Klassifikation darf jeder Baum in diesem Wald eine Entscheidung treffen und die Klasse mit den meisten Stimmen entscheidet die endgültige Klassifikation. Random Forests können auch zur Regression eingesetzt werden.

Bei der Bestimmung des Stör-Parameters 12 wird im Schritt c) zumindest eine Stör-Ursache erfasst, welche durch den Betriebszustands-Schätzer und im Betriebszustands-Signal 30 berücksichtigt wird.

Die Stör-Ursache kann beispielsweise manuell einem Datensatz, welcher den Stör-Parameter 12 umfasst, hinzugefügt werden, beispielsweise durch eine oder mehrere Klassifizierungs-Informationen hinsichtlich eines "machine learning"-Anlagen-Modells.

Bei der Bestimmung des Stör-Parameters 12 wird im Schritt c) zumindest ein Zeitpunkt des Stör-Betriebs erfasst, welche durch den Betriebszustands-Schätzer und im Betriebszustands-Signal 30 berücksichtigt wird.

Es wird ein weiterer Verfahrensschritt g) ausgeführt, in welchem das Anlagen-Modell 20 unter Verwendung des aktuellen Parameters 13 neu bestimmt wird.

Der Betriebszustands-Schätzer kann vorteilhaft bei der Bestimmung eines Wartungsintervalls der Anlage 1 verwendet werden.

**Fig. 2** zeigt eine Vorrichtung 100 zur Überwachung des Betriebszustands einer Anlage 1.

Die Anlage 1 kann beispielsweise eine Produktionsanlage wie eine CNC-Fräsmaschine sein, in welcher Elektromotoren vorgesehen sind, die Fräsungen bzw. Bohrungen in ein Bauteil einbringen. Die Drehzahl, die Betriebstemperatur, und das Drehmoment der jeweiligen Elektromotoren sind in diesem Ausführungsbeispiel vom Anlagen-Modell 20 umfasst. Die Art, Lage und Größe der einzelnen Fräsungen kann zu stark variierenden Zeitspannen der Belastungen auf die Elektromotoren führen, wodurch sehr unterschiedliche Störgrößen auftreten können. Die Erfindung erlaubt es, diese variierenden Störgrößen zu erfassen und in einer entsprechenden Prognose zu berücksichtigen, wodurch in weiterer Folge die Wartung der CNC-Anlage 1 effizient geplant werden kann.

Die Überwachungs-Vorrichtung 100 umfasst Erfassungs-Mittel 110-113 und eine Rechnen-Vorrichtung 120.

Es sind Erfassungs-Mittel 110-113 vorgesehen, welche dazu eingerichtet sind, einen Referenz-Parameter 10, einen Normal-Parameter 11, einen Stör-Parameter 12 und einen aktuellen Parameter 13 zu erfassen.

Die Rechnen-Vorrichtung 120 ist dazu eingerichtet, ein Anlagen-Modell 20, welches auf dem Prinzip des maschinellen Lernens beruht, zumindest mit dem Referenz-Parameter 10, dem Normal-Parameter 11 und dem Stör-Parameter 12 zu erzeugen und zu trainieren.

Die Rechnen-Vorrichtung 120 ist ferner dazu eingerichtet, einen Betriebszustands-Schätzer mittels dem Anlagen-Modell 20 und dem aktuellen Parameter 13 zu bestimmen.

Die Rechnen-Vorrichtung 120 ist außerdem dazu eingerichtet, bei Überschreiten des Betriebszustands-Schätzers gegenüber einem vorgegebenen Grenzwert ein Betriebszustands-Signal 30 auszugeben.

Die Überwachungs-Vorrichtung 100 ist dazu eingerichtet, das erfindungsgemäße Verfahren auszuführen.

Weitere Anwendungsbeispiele der Erfindung, bei welchen der zeitliche Verlauf eines Parameters erfasst wird, in weiterer Folge eine Kenngröße im Frequenzbereich gebildet wird, um einen Betriebszustands-Schätzer zu bestimmen und den Betriebszustand einer zugehörigen Anlage zu überwachen, sind:
- Überwachung der Drehzahl und der Vibrationen am Gehäuse einer Pumpe,
- Überwachung der Innen- und Außentemperaturen bei einem Bioreaktor oder Tankbehälter für Liquide oder Feststoffe,
- Überwachung der Ist- und Sollfarbe des durch einen Lackierroboter aufgetragenen Lacks, wobei ein Farbwert von einem optischen System erfasst wird,
- Überwachung des Wirkungsgrads oder der Blindleistung bei elektrotechnischen Einrichtungen.

### Bezugszeichenliste:

- 1: Produktions-Anlage
- 10: Referenz-Betriebsparameter
- 11: Normal-Betriebsparameter
- 12: Stör-Betriebsparameter
- 13: aktueller Betriebsparameter
- 20: Anlagen-Modell
- 30: Betriebszustands-Signal
- 100: Überwachungs-Vorrichtung
- 110-113: Erfassungs-Mittel
- 120: Rechen-Vorrichtung

## Patentansprüche

1. Verfahren zur Überwachung des Betriebszustands einer Anlage (1), wobei folgende Schritte ausgeführt werden:
a) Erfassen des zeitlichen Verlaufs zumindest eines Betriebsparameters in einem Referenzbetrieb der Anlage (1) und Transformieren in den Frequenzbereich als Referenz-Parameter (10),
b) Erfassen des zeitlichen Verlaufs des zumindest Betriebsparameters in einem Normalbetrieb der Anlage (1) und Transformieren in den Frequenzbereich als Normal-Parameter (11),
c) Erfassen des zeitlichen Verlaufs des zumindest Betriebsparameters in einem Störbetrieb der Anlage (1) und Transformieren in den Frequenzbereich als Stör-Parameter (12),
d) Erzeugen und Trainieren eines Anlagen-Modells (20), welches auf dem Prinzip des maschinellen Lernens beruht, zumindest mit dem Referenz-Parameter (10), dem Normal-Parameter (11) und dem Stör-Parameter (12),
e) Erfassen des zeitlichen Verlaufs des zumindest einen Betriebsparameters in einem laufenden Betrieb der Anlage (1) und Transformieren in den Frequenzbereich als aktuellen Parameter (13),
f) Erzeugen eines Betriebszustands-Schätzers mittels dem Anlagen-Modell (20) und dem aktuellen Parameter (13), wobei bei Überschreiten des Betriebszustands-Schätzers gegenüber einem vorgegebenen Grenzwert ein Betriebszustands-Signal (30) ausgegeben wird.

2. Verfahren nach dem vorhergehenden Anspruch, wobei sich der Referenzbetrieb von dem Normalbetrieb der Anlage (1) durch unterschiedliche Betriebsmodi der Anlage (1) unterscheidet, beispielsweise unterschiedliche Belastungen oder verschiedene Betriebszeitpunkte der Anlage (1) während des Betriebs.

3. Verfahren nach einem der vorhergehenden Ansprüche, wobei die Zeitbasis für die Bestimmung des Referenz-Parameters (10), des Normal-Parameters (11), des Stör-Parameters (12) und des aktuellen Parameters (13) gleich lang ist.

4. Verfahren nach einem der vorhergehenden Ansprüche, wobei bei der Bestimmung des Stör-Parameters (12) im Schritt c) zumindest eine Stör-Ursache erfasst wird, welche durch den Betriebszustands-Schätzer und vorzugsweise im Betriebszustands-Signal (30) berücksichtigt wird.

5. Verfahren nach einem der vorhergehenden Ansprüche, wobei bei der Bestimmung des Stör-Parameters (12) im Schritt c) zumindest ein Zeitpunkt des Stör-Betriebs erfasst wird, welche durch den Betriebszustands-Schätzer und vorzugsweise im Betriebszustands-Signal (30) berücksichtigt wird.

6. Verfahren nach einem der vorhergehenden Ansprüche, wobei ein weiterer Verfahrensschritt g) ausgeführt wird, in welchem das Anlagen-Modell (20) unter Verwendung des aktuellen Parameters (13) neu bestimmt wird.

7. Verfahren nach einem der vorhergehenden Ansprüche, wobei der Betriebszustands-Schätzer bei der Bestimmung eines Wartungsintervalls der Anlage (1) verwendet wird.

8. Vorrichtung (100) zur Überwachung des Betriebszustands einer Anlage (1), wobei von der Vorrichtung
zumindest ein Erfassungs-Mittel (110-113) umfasst ist, welches dazu eingerichtet ist, einen Referenz-Parameter (10), einen Normal-Parameter (11), einen Stör-Parameter (12) und einen aktuellen Parameter (13) zu erfassen, und
von der Vorrichtung ferner zumindest eine Rechnen-Vorrichtung (120) umfasst ist, welche dazu eingerichtet ist, ein Anlagen-Modell (20), welches auf dem Prinzip des maschinellen Lernens beruht, zumindest mit dem Referenz-Parameter (10), dem Normal-Parameter (11) und dem Stör-Parameter (12) zu erzeugen und zu trainieren, und einen Betriebszustands-Schätzer mittels dem Anlagen-Modell (20) und dem aktuellen Parameter (13) zu bestimmen, und bei Überschreiten des Betriebszustands-Schätzers gegenüber einem vorgegebenen Grenzwert ein Betriebszustands-Signal (30) auszugeben, und das Verfahren nach einem der vorhergehenden Ansprüche auszuführen.

## Claims

1. Method for monitoring the operating state of an installation (1), wherein the following steps are carried out:
a) detecting the temporal progression of at least one operating parameter in a reference operation of the installation (1) and transforming it into the frequency range as a reference parameter (10),
b) detecting the temporal progression of the at least operating parameter in a normal operation of the installation (1) and transforming it into the frequency range as a normal parameter (11),
c) detecting the temporal progression of the at least operating parameter in an interference operation of the installation (1) and transforming it into the frequency range as an interference parameter (12),
d) generating and training an installation model (20), which is based on the principle of machine learning, at least with the reference parameter (10), the normal parameter (11) and the interference parameter (12),
e) detecting the temporal progression of the at least one operating parameter during ongoing operation of the installation (1) and transforming it into the frequency range as a current parameter (13),
f) generating an operating state estimator by means of the installation model (20) and the current parameter (13), wherein, when the operating state estimator is exceeded in relation to a predefined limit value, an operating state signal (30) is output.

2. Method according to the preceding claim, wherein the reference operation differs from the normal operation of the installation (1) by way of different operating modes of the installation (1), for example different loads or different operating time points of the installation (1) during the operation.

3. Method according to one of the preceding claims, wherein the time base is of equal length for the determination of the reference parameter (10), the normal parameter (11), the interference parameter (12) and the current parameter (13).

4. Method according to one of the preceding claims, wherein during the determination of the interference parameter (12) in step c), at least one interference cause is detected, which is taken into consideration by the operating state estimator and preferably in the operating state signal (30).

5. Method according to one of the preceding claims, wherein during the determination of the interference parameter (12) in step c), at least one time point of the interference operation is detected, which is taken into consideration by the operating state estimator and preferably in the operating state signal (30).

6. Method according to one of the preceding claims, wherein a further method step g) is carried out, in which the installation model (20) is redetermined using the current parameter (13).

7. Method according to one of the preceding claims, wherein the operating state estimator is used during the determination of a maintenance interval of the installation (1).

8. Apparatus (100) for monitoring the operating state of an installation (1), wherein the apparatus
comprises at least one detection means (110-113), which is configured to detect a reference parameter (10), a normal parameter (11), an interference parameter (12) and a current parameter (13), and
the apparatus further comprises at least one computing apparatus (120), which is configured to generate and train an installation model (20), which is based on the principle of machine learning, at least with the reference parameter (10), the normal parameter (11) and the interference parameter (12), and to determine an operating state estimator by means of the installation model (20) and the current parameter (13) and, when the operating state estimator is exceeded in relation to a predefined limit value, to output an operating state signal (30), and to carry out the method according to one of the preceding claims.

## Revendications

1. Procédé de surveillance de l'état de fonctionnement d'une installation (1), dans lequel les étapes suivantes sont exécutées :
a) saisie de l'évolution temporelle d'au moins un paramètre de fonctionnement dans un fonctionnement de référence de l'installation (1) et transformation dans la gamme de fréquences en tant que paramètre de référence (10),
b) saisie de l'évolution temporelle de l'au moins un paramètre de fonctionnement dans un fonctionnement normal de l'installation (1) et transformation dans la gamme de fréquences en tant que paramètre normal (11),
c) saisie de l'évolution temporelle de l'au moins un paramètre de fonctionnement dans un fonctionnement perturbé de l'installation (1) et transformation dans la gamme de fréquences en tant que paramètre de perturbation (12),
d) génération et entraînement d'un modèle d'installation (20), qui repose sur le principe de l'apprentissage machine, au moins avec le paramètre de référence (10), le paramètre normal (11) et le paramètre de perturbation (12),
e) saisie de l'évolution temporelle de l'au moins un paramètre de fonctionnement dans un fonctionnement actuel de l'installation (1) et transformation dans la gamme de fréquences en tant que paramètre actuel (13),
f) production d'un estimateur d'état de fonctionnement au moyen du modèle d'installation (20) et du paramètre actuel (13), un signal d'état de fonctionnement (30) étant émis lors du dépassement de l'estimateur d'état de fonctionnement par rapport à une valeur limite prédéterminée.

2. Procédé selon la revendication précédente, dans lequel le fonctionnement de référence se distingue du fonctionnement normal de l'installation (1) par des modes de fonctionnement de l'installation (1) qui sont différents, par exemple des charges différentes ou des moments de fonctionnement différents de l'installation (1) pendant le fonctionnement.

3. Procédé selon l'une des revendications précédentes, dans lequel la base de temps pour la détermination du paramètre de référence (10), du paramètre normal (11), du paramètre de perturbation (12) et du paramètre actuel (13) est de même longueur.

4. Procédé selon l'une des revendications précédentes, dans lequel, lors de la détermination du paramètre de perturbation (12), on identifie, à l'étape c), au moins une cause de perturbation qui est prise en compte par l'estimateur d'état de fonctionnement et, de préférence, dans le signal d'état de fonctionnement (30).

5. Procédé selon l'une des revendications précédentes, dans lequel, lors de la détermination du paramètre de perturbation (12), on détecte, à l'étape c), au moins un moment du fonctionnement perturbé qui est pris en compte par l'estimateur d'état de fonctionnement et, de préférence, dans le signal d'état de fonctionnement (30).

6. Procédé selon l'une des revendications précédentes, dans lequel une étape de procédé supplémentaire g) est exécutée, dans laquelle le modèle d'installation (20) est déterminé à nouveau en utilisant le paramètre actuel (13).

7. Procédé selon l'une des revendications précédentes, dans lequel l'estimateur d'état de fonctionnement est utilisé lors de la détermination d'un intervalle de maintenance de l'installation (1).

8. Dispositif (100) de surveillance de l'état de fonctionnement d'une installation (1), le dispositif comprenant au moins un moyen de saisie (110-113) qui est conçu pour saisir un paramètre de référence (10), un paramètre normal (11), un paramètre de perturbation (12) et un paramètre actuel (13), et le dispositif comprenant, en outre, au moins un dispositif de calcul (120) qui est conçu pour générer et entraîner un modèle d'installation (20), qui repose sur le principe de l'apprentissage machine, au moins avec le paramètre de référence (10), le paramètre normal (11) et le paramètre de perturbation (12), et pour déterminer un estimateur d'état de fonctionnement à l'aide du modèle d'installation (20) et du paramètre actuel (13), et pour émettre un signal d'état de fonctionnement (30) lors du dépassement de l'estimateur d'état de fonctionnement par rapport à une valeur limite prédéterminée, et pour exécuter le procédé selon l'une des revendications précédentes.
